# EUROPÄISCHE PATENTSCHRIFT

(11) **EP 0 585 510 B1**
(45) Veröffentlichungstag und Bekanntmachung des Hinweises auf die Patenterteilung: **07.01.1998**
(21) Anmeldenummer: 92850204.6
(22) Anmeldetag: 31.08.1992
(51) Int. Cl.: B60P 7/13, B61D 45/00, B65D 88/12

(54) **Transportsystem**
Conveyor system
Système de transport

(43) Veröffentlichungstag der Anmeldung: 09.03.1994
(73) Patentinhaber: LAGAB AB, S-312 22 Laholm (SE)
(72) Erfinder: Johansson, Göran, S-302 65 Halmstadt (SE); Andersson, Holger, S-312 95 Laholm (SE)
(74) Vertreter: Berglund, Gustav Arthur

(56) Entgegenhaltungen:
- EP-A- 0 446 388
- CH-A- 554 798
- DE-U- 9 113 145

## Beschreibung

Die vorliegende Erfindung betrifft ein Transportsystem, insbesondere einen mit Verriegelungen versehenen Zwischenrahmen bzw. Fahrgestellteil zum Zusammenwirken mit einem Beförderungsbehälter.

Große Mengen Ladegut werden mit verschiedenen Typen von Beförderungsmitteln zwischen verschiedenen Punkten befördert. Zur Nahbeförderung in einem geographisch abgegrenzten Bereich, beispielsweise einer Stadt, werden meistens Lastkraftwagen eingesetzt, während Fernbeförderung mit der Bahn oder auf dem Seewege erfolgt. Auch Luftfracht wird immer mehr benutzt.

Transport von insbesondere Stückgut kann verschiedenartig erfolgen. Das Gut kann in gewöhnlichen, offenen oder geschlossenen Güterwagen oder in Containern untergebracht werden, die auf einem Eisenbahnwagen befördert werden oder zur Weiterbeförderung auf Landstraßen auf einen Lastkraftwagen umgeladen werden können. Es ist ferner üblich, einen kompletten Anhänger mit der Bahn zu befördern, welcher an dem Bestimmungsort vom Eisenbahnwagen herabgehoben oder herabgefahren wird und zwecks Weiterbeförderung auf Landstraßen von einem Zugfahrzeug abgeholt wird.

Zur Vereinfachung des Umladens zwischen Eisenbahn und Lastkraftwagen hat man ein Transportsystem mit sog. Wechselpritschen entwickelt, wobei ein für den Zweck vorgesehener Lastkraftwagen eine mit der Bahn beförderte Pritsche übernimmt, auf welcher sich ein Beförderungsbehälter befindet. Zur Festlegung eines solchen Behälters wird eine Verriegelungsvorrichtung benötigt. Eine solche Verriegelungsvorrichtung ist aus der DE-U-91 13 145 bekannt. Mit der in DE-U-91 13 145 gezeigten Vorrichtung ist es möglich einen Behälter durch zentrale Ver- und Entriegelung an einem Träger festzulegen. Durch die Ausführung der Betätigungshandhaben in Form von Kurbeln ist es doch nicht möglich auf Anhieb auszumachen ob der Behälter Ver- oder Entriegelt ist. Es hat sich leider auch erwiesen das es durch Unebenheiten in der Fahrbahn oder der Gleise hervorgerufenes Rütteln zu einer unerwünschten Entriegelung eines auf dem Träger ursprünglich festgelegten Behälter führen kann.

Der Erfindung liegt die Aufgabe zugrunde, ein neues Transportsystem mit einem von beiden Längsseiten betätigbaren Zwischenrahmen zum Fixieren der Lage eines sich auf dem Zwischenrahmen befindenden Beförderungsbehälters zu schaffen.

Eine weitere Aufgabe der Erfindung besteht darin, den Unterteil des Beförderungsbehälters zum Eingriff mit dem Zwischenrahmen auszubilden.

Diese und weitere Aufgaben werden durch ein Transportsystem mit den im Kennzeichnenden Teil von Anspruch 1 angegebenen Merkmalen gelöst.

Die vorliegende Erfindung ist anhand der beigefügten Zeichnungen im folgenden näher beschrieben.

Fig. 1 ist eine Draufsicht eines Zwischenrahmens des erfindungsmässigen Transportsystems.

Fig. 2 ist eine vergrößerte, teilweise weggebrochene Draufsicht des in Fig. 1 gezeigten Zwischenrahmens.

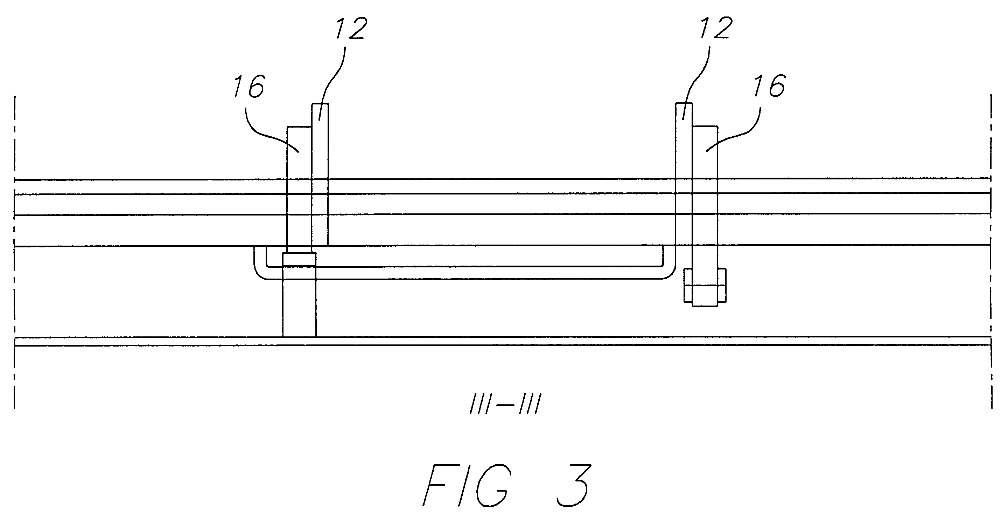

Fig. 3 ist ein Querschnitt längs der Linie III-III in Fig. 2.

Fig. 4 ist ein Querschnitt längs der Linie IV-IV in Fig. 2.

Fig. 5 ist eine vergrößerte Teilansicht eines speziell in Fig. 4 dargestellten Verriegelungsmechanismus.

Fig. 6 und 7 sind schematische Draufsichten eines Ausschwenkmechanismus.

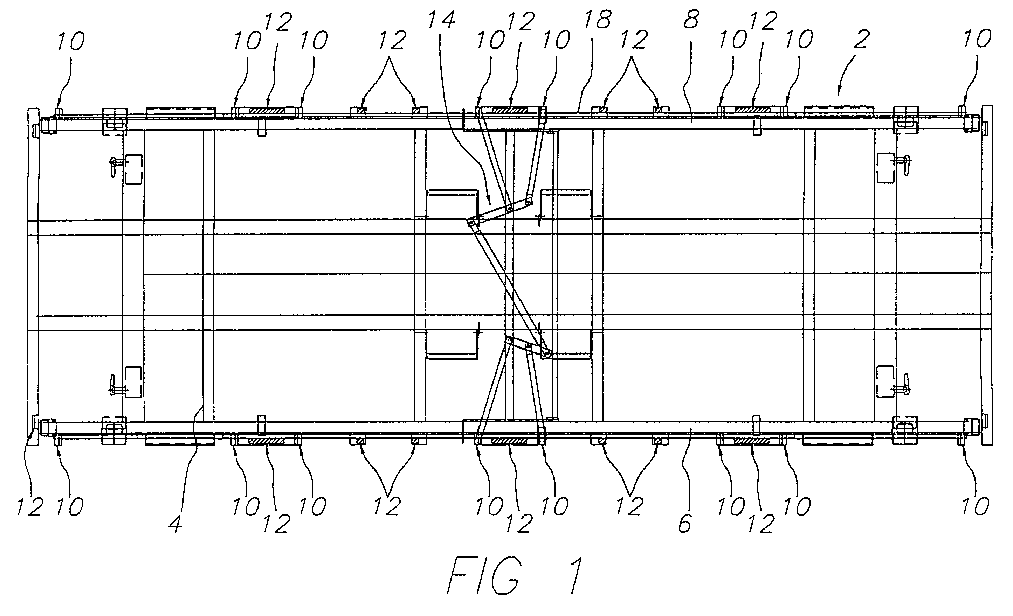

Erst wird auf Fig. 1 hingewiesen, die eine Draufsicht eines Zwischenrahmens 2 des erfindungsmässigen Transportsystems ist. Der Zwischenrahmen 2 umfaßt im wesentlichen einen langgestreckten Tragrahmen 4 mit Abmessungen, die mit denen der verwendeten Beförderungsbehälter übereinstimmen. Zum Fixieren der Lage eines oder mehrerer Beförderungsbehälter (nicht gezeigt) auf dem Zwischenrahmen 2 sind an den Längsseiten 6 bzw. 8 des Zwischenrahmens 2 Verriegelungen 10 angeordnet, welche weiter unten näher beschrieben sind. Der Zwischenrahmen 2 ist ferner mit einer Vielzahl Anschläge 12 versehen, welche die Bewegung eines Behälters in der Längsrichtung des Zwischenrahmens 2 begrenzen.

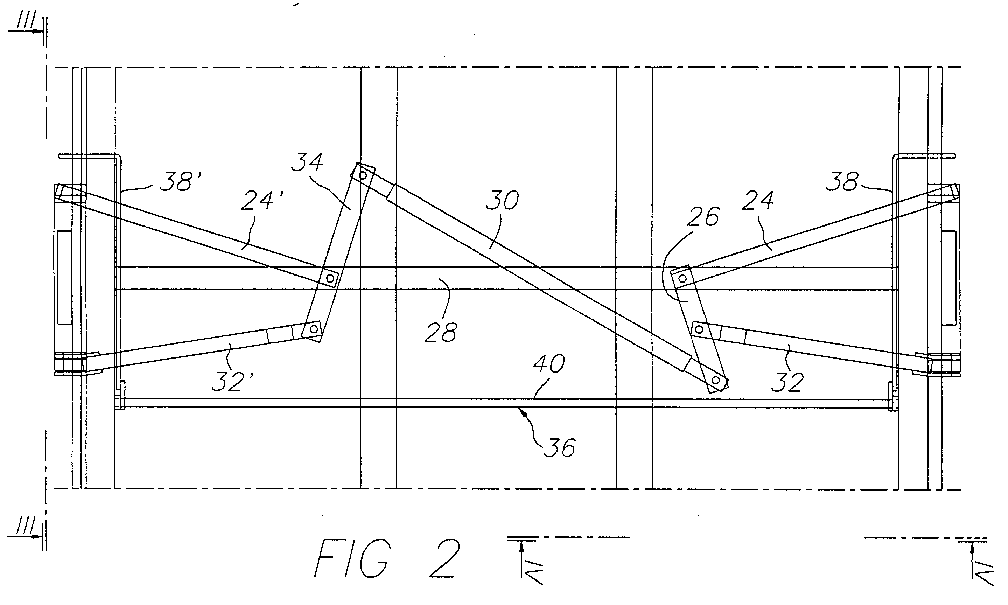

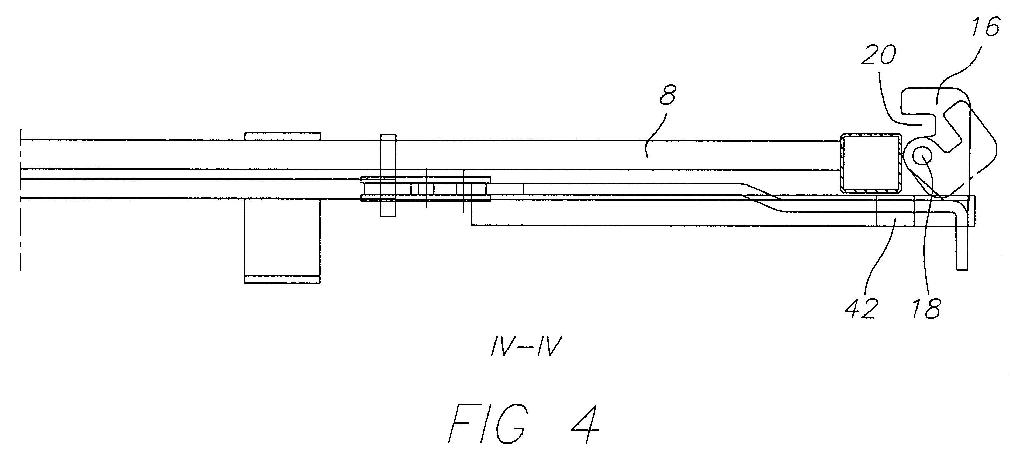

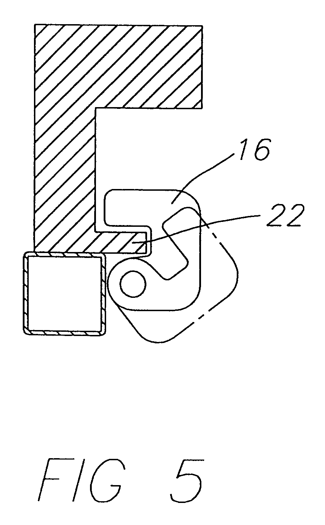

Es wird jetzt auf Fig. 2 und 4 hingewiesen, wobei Fig. 2 eine vergrößerte Teilansicht des in Fig. 1 gezeigten Zwischenrahmens 2 ist, während Fig. 4 ein teilweise weggebrochener Querschnitt längs einer Linie IV-IV in Fig. 2 ist. Fig. 2 zeigt ein sich quer zu den Längsseiten 6 bzw. 8 des Zwischenrahmens 2 erstreckendes Gelenksystem 14 zum Betätigen der Verriegelungen 10. Wie aus Fig. 4 ersichtlich, umfaßt die Verriegelung der hier veranschaulichten Ausführungsform der vorliegenden Erfindung etwa U-förmige Verriegelungsabsätze 16, welche mittels horizontaler, sich zwischen den Verriegelungsabsätzen 16 auf derselben Längsseite 6 bzw. 8 erstreckender Verbindungsglieder 18 miteinander verbunden sind, wobei die Enden des jeweiligen Verbindungsglieds 18 je mit einem Schenkel eines entsprechenden Verriegelungsabsatzes 16 fest verbunden sind. Durch Betätigung des Gelenksystems 14 werden die Verriegelungsabsätze 16 auf den beiden Längsseiten 6 bzw. 8 des Zwischenrahmens 2 entweder in eine hochgeklappte, die Behälter verriegelnde Lage, die in Fig. 4 durch eine kräftige, ausgezogene Linie gezeigt ist, oder in eine hinausgeklappte, die Behälter freigebende Lage, die in Fig. 4 durch eine dünne, ausgezogene Linie gezeigt ist, gebracht, wobei eine Aussparung 20 in oder außer Eingriff mit einer Kante 22 des unteren Teils des Behälters gebracht wird. Dies ist noch deutlicher in Fig. 5 gezeigt, wo die Kante 22 des unteren Teils eines Behälters von dem durch die ausgezogene Linie gezeigten Verriegelungsabsatz 16 verriegelt ist. Durch eine strichpunktierte Linie ist in Fig. 5 die hinausgeklappte, den Behälter freigebende Lage des Verriegelungsabsatzes 16 gezeigt. Durch die erfindungsmässige Ausführung des Gelenksystems 14 ist die Möglichkeit gegeben, sämtliche Verriegelungsabsätze 16 von den beiden Längsseiten 6 bzw. 8 des Zwischenrahmens 2 aus zu betätigen. Ein Steuerarm 24 bzw. 24' ist von der Längsseite 6 bzw. 8 des Zwischenrahmens 2 zugänglich. Der Steuerarm 24, 24' ist zwischen zwei Endlagen bewegbar, und zwar einer ersten, verriegelnden Lage, in welcher die Verriegelungen 10 in die genannte, die Behälter verriegelnde Lage gebracht werden, und einer freigebenden Lage, in welcher die Verriegelungen 10 in die genannte, die Behälter freigebende Lage gebracht werden.

Der eine Steuerarm 24 ist an seinem von der einen Längsseite 6 des Zwischenrahmens 2 abgewandten Ende mit einem Ende eines Stegs 26 fest verbunden, zwischen welchen ein im wesentlichen gerader Winkel gebildet wird. Zum Drehen in der Horizontalebene sind dieselben Enden mit einem zwischen den Endlagen des Steuerarms eingerichteten, sich quer zum Zwischenrahmen 2 erstreckenden Rahmenteil 28 beweglich verbunden. Das vom Befestigungsbereich abgewandte Ende des Stegs 26 ist mit einem langgestreckten, sich in Richtung zur entgegengesetzten Längsseite erstreckenden Diagonalsteg 30 drehbar verbunden. Zwischen den genannten Enden ist der Steg 26 mit einem das genannte Verbindungsglied 18 betätigenden Steg 32 drehbar verbunden. Das vom Befestigungspunkt mit dem Steg 26 abgewandte Ende des Diagonalstegs 30ist mit einem Zwischensteg 34 drehbar verbunden, welcher bei Bildung eines etwa rechten Winkels sich in Richtung zur anderen Längsseite 8 erstreckt. An dem vom Befestigungspunkt mit dem Diagonalsteg 30 abgewandten Ende ist der Zwischensteg 34 mit einem das genannte Verbindungsglied 18 betätigenden Steg 32' drehbar verbunden. Zwischen den genannten Befestigungspunkten ist der Zwischensteg 34 mit dem Steuerarm 24' fest verbunden, welcher von der genannten anderen Längsseite 8 betätigbar ist. Zum Drehen in der Horizontalebene ist der Befestigungspunkt des Steuerarms 24' mit dem Zwischensteg 34 mit dem zwischen den Endlagen des Steuerarms 24 bzw. 24' eingerichteten, sich quer zum Zwischenrahmen 2 erstreckenden Rahmenteil 28 beweglich verbunden.

Zum Verhindern von unabsichtlicher Betätigung des Arms 24, 24' und zur Fixierung in der genannten verriegelnden Lage ist ein ebenfalls von den beiden Längsseiten 6 bzw. 8 des Zwischenrahmens 2 aus betätigbares Sperrglied 36 angeordnet. Ein Sperrhaken 38 auf der einen Längsseite 6 ist über einen sich quer zum Zwischenrahmen erstreckenden Sperrhaken 40 mit einem entsprechenden Sperrhaken 38' auf der anderen Längsseite 8 verbunden. Am Sperrhaken 38 bzw. 38' ist ein Anschlag 42 befestigt, der in der verriegelnden Endlage des Steuerarms 24, 24' normalerweise hinter der von der genannten Endlage abgewandten Seite des Steuerarms 24, 24' eingreift. Durch Freigabe des Sperrglieds wird der Anschlag 42 außer Eingriff mit der von der genannten Endlage abgewandten Seite des Steuerarms 24, 24' gebracht, und der Steuergriff 24, 24' kann in die andere, die Verriegelungen 10 freigebende Endlage versetzt werden. Während dieser Versetzung des Steuerarms 24, 24' wird der Sperrhaken 38, 38' und somit der Absatz 42 von seinem eigenen Gewicht gegen die Oberseite des Steuerarms gepreßt. Wenn der Steuerarm 24, 24' schließlich in die verriegelnde Lage zurückgebracht wird, wird somit der Absatz 42 automatisch in Eingriff mit dem Steuerarm 24, 24' gebracht, der in dieser Lage fixiert wird. Es wird somit wirksam verhindert, daß der Steuerarm 24, 24' durch z.B. Rütteln unabsichtlich in die freigebende Lage versetzt wird, was dazu führen könnte, daß die sich auf dem Zwischenrahmen 2 befindenden Behälter hinunterfallen würden.

Um einen oder mehrere Behälter des eingangs erwähnten Typs auf den Zwischenrahmen 2 zu stellen, oder einen oder mehrere Behälter vom Zwischenrahmen 2 weg zu bewegen, werden die Verriegelungsabsätze 16 erst in die freigebende Lage versetzt. Dies erfolgt dadurch, daß der Sperrhaken 38 oder 38' hochgehoben wird, wonach ein Versetzen des Steuerarms 24, 24' eingeleitet wird. Wenn das Versetzen des Steuerarms einmal eingeleitet worden ist, kann der Sperrhaken wieder hinuntergelassen werden, wobei der Anschlag 42 auf der Oberseite des Steuerarms gleitet. Die seitliche Bewegung des Steuerarms wird über das Gelenksystem 14 teils auf den Steuerarm auf der entgegengesetzten Seite des Zwischenrahmens 2, teils auf die Verbindungsglieder 18 auf beiden Seiten des Zwischenrahmens 2 übertragen, wobei die Verriegelungsabsätze 16 nach außen, von der Längsseite 6 bzw. 8 des Zwischenrahmens 2 weg und in die hinausgeschwenkte, freigebende Lage versetzt werden. In dieser Lage ist es möglich, beispielsweise mit Hilfe eines Gabelstaplers einen Behälter auf den Zwischenrahmen 2 zu stellen oder einen auf dem Zwischenrahmen 2 befindlichen Behälter abzuheben. Nachdem die gewünschte Anzahl Behälter auf den Zwischenrahmen 2 gestellt worden ist, werden die Verriegelungsabsätze 16 in die verriegelnde Lage gebracht. Dies erfolgt entweder durch Betätigung des einen Steuerarms 24 auf der einen Längsseite 6 oder des anderen Steuerarms 24' auf der entgegengesetzten Längsseite 8, da die Steuerarme 24, 24' funktionsmässig über das Gelenksystem 14 miteinander verbunden sind. Der Steuerarm 24, 24' wird durch ein einfaches seitliches Versetzen von der freigebenden Endlage in die verriegelnde Lage versetzt. Wenn die verriegelnde Endlage erreicht worden ist, fällt der Sperrhaken 38, 38' durch sein eigenes Gewicht automatisch nach unten in die Sperrlage, in welcher verhindert wird, daß der Steuerarm 24, 24' seitlich versetzt wird. Der Zwischenrahmen 2 kann auf einem Lastkraftwagen desselben Typs wie beim Befördern von Containern oder mit der Bahn befördert werden.

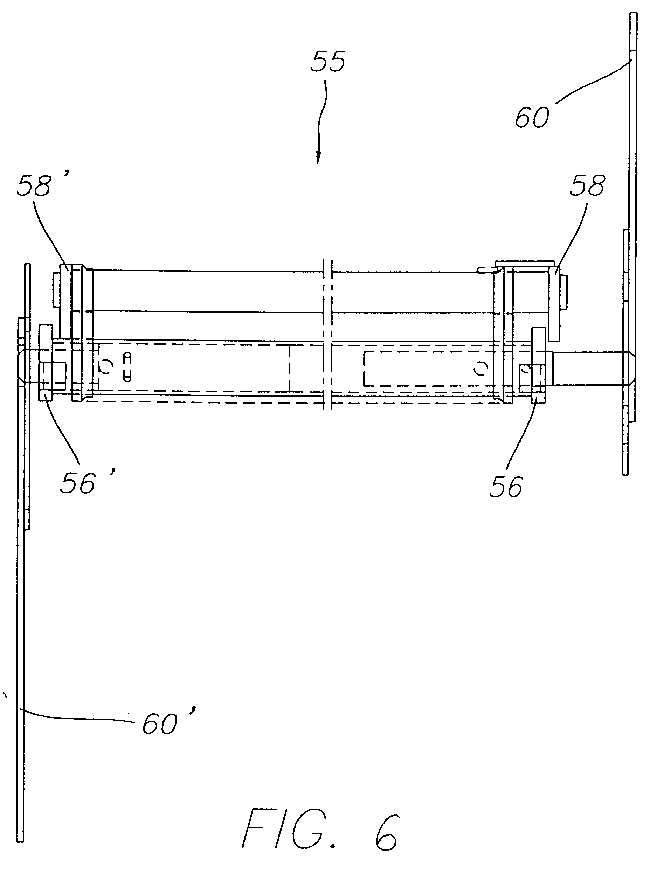

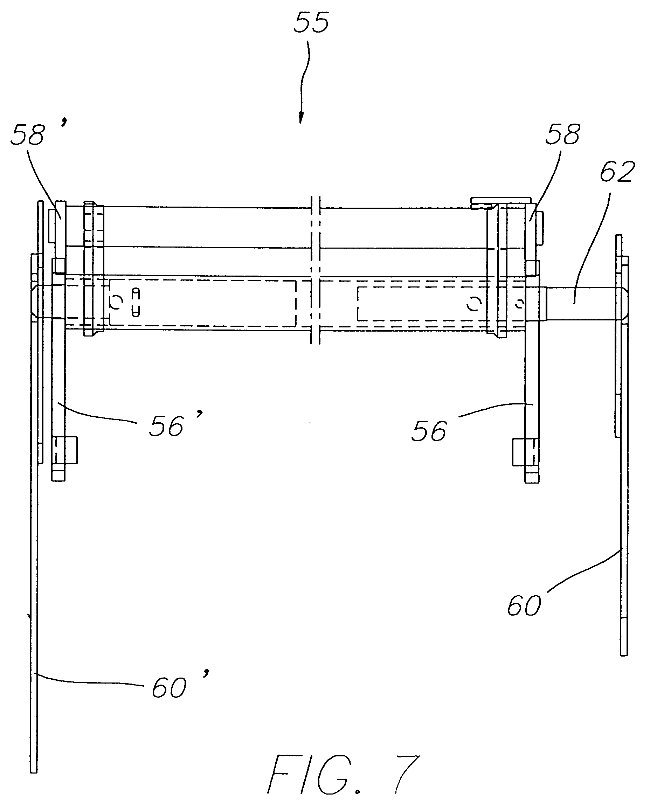

Wenn ein Behälter mit Aufrolltür verwendet wird, beispielsweise zum Befördern von Stückgut, kann es schwierig sein, die Aufrolltür zu öffnen, wenn sie einem Druck ausgesetzt ist, weil das Stückgut umgefallen ist und von innen gegen die Tür preßt, insbesondere wenn sich die Behälter auf dem Zwischenrahmen 2 nebeneinander befinden. Deshalb sind solche Behälter mit ausschwenkbaren Aufrolltürseiten versehen. Jede Aufrolltürseite umfaßt zwei Schienen, deren obere Enden in einem Bolzengelenk mit Sicherheitsanschlag pendelnd aufgehängt sind. Am unteren Ende der jeweiligen Schiene ist ein in Fig. 6 und 7 schematisch dargestellter Mechanismus 55 zur Betätigung der Aufrolltürseiten angeordnet. Wie in Fig. 6 und 7 gezeigt, erstreckt sich der Aufrolltürmechanismus zwischen den beiden Schienen, um von beiden Seiten betätigbar zu sein. Fig. 6 zeigt eine Lage, in der ein Verriegelungshebel 56, 56' freigelegt ist und somit ein Ausschwenken der Aufrolltürseite gestattet. Fig. 7 zeigt dagegen eine verriegelte Lage, in welcher der Verriegelungshebel 56, 56' mit einer Sperre 58, 58' eingreift, wodurch das Ausschwenken der Aufrolltürseite verhindert wird. Der Mechanismus wird wie folgt betätigt. Ein Steuergriff 60, 60' hat eine runde Achse 62, die in einen Abschnitt übergeht, der in diesem Falle quadratischen Querschnitt hat. Der Steuergriff 60, 60' wird ein Stück in die rechts in Fig. 7 veranschaulichte Lage hinausgezogen. Fig. 7 zeigt deutlich, daß die Sperre 58, 58' mit dem Verriegelungshebel 56, 56' im Eingriff ist und somit das Ausschwenken der Aufrolltürseiten verhindert. In dieser Lage hat der eckige Abschnitt eine Aussparung von entsprechender, jedoch durch Drehung verschobener Ausführung passiert. Der Steuergriff 60, 60' wird im oder gegen den Uhrzeigersinn gedreht, bis der eckige Abschnitt in die genannte Aussparung eingreifen kann. Dadurch wird die Voraussetzung geschaffen, durch Anbringen einer Druckkraft auf den Steuergriff in Frage die Sperre 58, 58' gegenüber dem Verriegelungshebel 56, 56', s. Fig. 6, derart zu verschieben, daß dieser durch weiteres Drehen des Steuergriffs, dessen eckiger Abschnitt mit der genannten Aussparung in Eingriff ist, betätigt werden kann, um die Aufrolltürseite hinauszuschwenken.

## Patentansprüche

1. Transportsystem umfassend einen langgestreckten Zwischenrahmen (2) zum Fixieren wenigstens eines Beförderungsbehälters, wobei an den beiden Längsseiten (6, 8) des Zwischenrahmens (2) eine Vielzahl Verriegelungen (10) angeordnet sind, und mit einem sich zwischen den Längsseiten (6, 8) des Zwischenrahmens (2) erstreckendes, kraftübertragendes Glied (14), und ein auf jeder Längsseite (6, 8) angeordnetes, zwischen zwei Endlagen bewegbarer Steuerarm (24, 24') zum gleichzeitigen Bewegen der Verriegelungen (10) der beiden Längsseiten (6, 8) zwischen einer den Behälter verriegelnde Endlage und einer den Behälter freigebende Endlage dadurch **gekennzeichnet,** daß das kraftübertragende Glied (14) einen Steg (26), der mit dem auf der einen Längsseite (6) angeordneten Steuerarm (24), mit einem Diagonalsteg (30), sowie mit einem ersten Steuersteg (32) zum Bewegen der genannten Verriegelungen (10) auf der einen Längsseite (6) zwischen den genannten Endlagen verbunden ist, sowie einen Zwischensteg (34), der mit dem auf der anderen Längsseite (8) angeordneten Steuerarm (24'), mit dem genannten Diagonalsteg (30), sowie mit einem zweiten Steuersteg (32') zum Bewegen der genannten Verriegelungen (10) auf der anderen Längsseite (8) zwischen den genannten Endlagen verbunden ist, umfaßt, wobei die beiden Steuerarme (24, 24') gleichzeitig von der einen Endlage in die andere Endlage versetzt werden und somit auf beiden Längsseiten (6, 8) durch ihre Position die momentane Lage der Verriegelungen (10) anzeigen.

2. Transportsystem nach Anspruch 1, dadurch **gekennzeichnet,** daß an den beiden Längsseiten (6, 8) des Zwischenrahmens (2) ferner eine Vielzahl Anschläge (12) angeordnet sind, die die Bewegung eines sich auf dem Zwischenrahmen (2) befindenden Behälters in der Längsrichtung des Zwischenrahmens begrenzen.

3. Transportsystem nach einem der Ansprüche 1-2, dadurch **gekennzeichnet,** daß ein von den beiden Längsseiten (6, 8) des Zwischenrahmens (2) aus steuerbares Sperrglied (36) angeordnet ist, das in der verriegelten Lage der Verriegelungen (10) automatisch mit dem Steuerarm (24, 24') eingreift und dabei ein Versetzen des Steuerarms (24, 24') in die freigebende Lage verhindert.

4. Transportsystem nach Anspruch 3, dadurch **gekennzeichnet,** daß das genannte Sperrglied (36) einen auf jeder Längsseite (6, 8) angeordneten Sperrhaken (38, 38') aufweist, der mit dem Sperrhaken (38, 38') auf der entgegengesetzten Längsseite verbunden ist, wobei jeder Sperrhaken (38, 38') einen Anschlag (42) aufweist, der in der verriegelnden Endlage des Steuerarms (24, 24') hinter dem Steuerarm (24, 24') eingreift und somit dessen Bewegung verhindert.

5. Transportsystem nach Anspruch 4, dadurch **gekennzeichnet,** daß der Sperrhaken (38, 38') federbelastet ist und dabei gegen das Steuerarm (24, 24') gepreßt wird.

6. Transportsystem nach einem der Ansprüche 1-5, dadurch **gekennzeichnet,** daß die Verriegelung (10) eine Vielzahl etwa U-förmiger Verriegelungsabsätze (16) und diese auf der jeweiligen Längsseite (6, 8) miteinander verbindende Verbindungsglieder (18) umfaßt, wobei die Enden des jeweiligen Verbindungsglieds(18) je mit einem Schenkel des entsprechenden Verriegelungsabsatzes (16) fest verbunden sind, und wobei die in jedem Verriegelungsabsatz (16) gebildete Aussparung (20) eine Kante (22) des unteren Teils eines sich auf dem Zwischenrahmen (2) befindenden Behälters umgreift.

7. Transportsystem nach einem der Ansprüche 1-5, dadurch **gekennzeichnet,** daß der Behälter mindestens eine Aufrolltürseite aufweist, daß die Aufrolltürseite in zwei Schienen geführt ist, die an ihren oberen Enden pendelnd aufgehängt sind, und daß am unteren Ende der jeweiligen Schiene ein Mechanismus (55) angeordnet ist, welcher ein Ausschwenken des unteren Teils der Aufrolltürseite ermöglicht.

8. Transportsystem nach Anspruch 7, dadurch **gekennzeichnet,** daß der Mechanismus (55) sich zwischen den genannten beiden Schienen erstreckt und einen Verriegelungshebel (56, 56') mit einer unverriegelten Lage und einer verriegelten Lage zum Ausschwenken des unteren Teils der Aufrolltürseite in der genannten unverriegelten Lage und zum Befestigen des unteren Teils der Aufrolltürseite in der verriegelten Lage, eine ausklinkbare Sperre (58, 58'), die in ihrem eingeklinkten Zustand den Verriegelungshebel (56, 56') in dessen verriegelter Lage fixiert, und einen Steuergriff (60, 60') zum Ausklinken der Sperre (58, 58') und Ausschwenken des unteren Teils der Aufrolltürseite umfaßt.

## Claims

1. A transport system comprising an elongate intermediate frame (2) for anchorage thereto of at least one transport container, said frame (2) being formed on its two longitudinal sides (6, 8) with a plurality of locking means (10) and comprising a drive transmission link system (14) extending between the longitudinal sides (6, 8) of the frame (2), and presenting, at each one of its longitudinal sides (6, 8), a control lever (24, 24') which is movable between two end positions for simultaneous displacement of the locking means (10) at both of the two longitudinal frame sides (6, 8) between a container-locking end position and a container-release end position, and vice versa, **characterized** in that the drive transmission link system (14) comprises a link arm (26) connected with the control lever (24) disposed at one (6) of the longitudinal frame sides as well as with a diagonally extending link arm (30) and with a first control link arm (32) for shifting said locking means (10) disposed at one (6) of the longitudinal frame sides between said end positions, and also an intermediary link arm (34) connected with the control lever (24') disposed at the opposite one (8) of the longitudinal frame sides as well as with said diagonally extending link arm (30) and with a second control link arm (32') for shifting said locking means (10) disposed at the opposite one (8) of the longitudinal frame sides between said end positions, whereby the two control levers (24, 24') are shifted simultaneously from one end position to the opposite end position, and thus by means of their very positions indicate the instantaneous condition of the locking means (10) on each one of the two longitudinal frame sides (6, 8).

2. A transport system as claimed in claim 1, **characterized** in that on said two longitudinal sides (6, 8) of the frame (2) is further arranged a plurality of stop means (12) for limiting the movements of a container disposed on the frame (2) in the longitudinal direction of said frame.

3. A transport system as claimed in any one of claims 1-2, **characterised** by the provision of a blocking device (36) arranged to be controlled from either one of the two longitudinal sides (6, 8) of the frame (2), said device arranged in the locked condition of the locking means (10) to automatically engage the control lever (24, 24'), thus preventing shifting of said control lever (24, 24') to the release position thereof.

4. A transport system as claimed in claim 3, **characterised** in that said blocking device (36) is formed at each one of the longitudinal frame sides (6, 8) with a hook-shaped catch (38, 38'), the catch (38, 38') on one longitudinal frame side being connected with the catch (38, 38') on the opposite longitudinal frame side, each catch (38, 38') formed with a limit stop (42) arranged in the blocking end position of the control lever (24, 24') to engage behind said lever (24, 24'), thus preventing the movement thereof.

5. A transport system as claimed in claim 5, **char-acterised** in that the catch (38, 38') is spring-biased so as to be pressed against said control lever (24, 24').

6. A transport system as claimed in anyone of claims 1-5, **characterized** in that the locking means (10) is formed with a plurality of essentially U-shaped locking lugs (16) and with members (18) inter-connecting the locking lugs (16) on the respective longitudinal frame side (6,8), the ends of each interconnecting member (18) being fixed to one leg each of a corresponding locking lug (16), and in that the recess (20) formed in each locking lug (16) engages an edge (22) of a lower part of a container disposed on said frame (2).

7. A transport system as claimed in claims 1-5, **characterised** in that at least one side of said container comprises a roll-up door, in that said roll-up door side comprises a couple of posts suspended in pendulum fashion from their upper ends, and in that a mechanism (55) is provided at the lower end of each post to allow swinging movements outwards of the lower part of said roll-up door side.

8. A transport system as claimed in claim 7, **characterised** in that said mechanism (55) extends between said two posts, said mechanism (55) comprising a locking arm (55, 56') having one unlocked position and one locked position for swinging the lower part of said roll-up door side outwards in said unlocked position and for anchoring said lower part of the roll-up door side in the locked position, a releasable catch (58, 58') which is arranged to immobilize said locking arm (56, 56') in its locked position, and an operating handle (60, 60') for releasing said catch (58, 58') for swinging said lower part of the roll-up side in an outwards direction.

## Revendications

1. Système de transport comprenant un bâti intermédiaire (2) s'étendant en direction longitudinale pour la fixation d'au moins un récipient de transport, dans lequel, contre les deux côtés longitudinaux (6, 8) du bâti intermédiaire (2), sont fixés une multitude de verrouillages (10) et comprenant un élément (14) de transmission de force motrice s'étendant entre les côtés longitudinaux (6, 8) du bâti intermédiaire (2), et un bras de commande (24, 24') disposé sur chacun des côtés longitudinaux (6, 8), mobile entre deux positions terminales pour permettre le mouvement simultané des verrouillages (10) des deux côtés longitudinaux (6, 8) entre une position terminale verrouillant le récipient et une position terminale libérant le récipient, caractérisé en ce que l'élément (14) de transmission de force motrice comprend une traverse (26) qui est reliée au bras de commande (24) disposé sur le premier côté longitudinal (6), à une traverse diagonale (30), et à une première traverse de commande (32) pour déplacer les verrouillages mentionnés (10) sur le premier côté longitudinal (6) entre les positions terminales mentionnées, ainsi qu'une traverse intermédiaire (34) qui est reliée au bras de commande (24') disposé sur l'autre côté longitudinal (8), à la traverse diagonale (30) susmentionnée, et à une seconde traverse de commande (32') pour déplacer les verrouillages mentionnés (10) sur l'autre côté longitudinal (8) entre les positions terminales mentionnées, dans lequel les deux bras de commande (24, 24') se déplacent simultanément en passant de la première position terminale à l'autre position terminale et indiquent ainsi, sur les deux côtés longitudinaux (6, 8), par leur emplacement, la position momentanée des verrouillages (10).

2. Système de transport selon la revendication 1, caractérisé en ce que, sur les deux côtés longitudinaux (6, 8) du bâti intermédiaire (2), sont disposées en outre une multitude de butées (12) qui limitent le mouvement d'un récipient se trouvant sur le bâti intermédiaire (2), dans la direction longitudinale du bâti intermédiaire.

3. Système de transport selon l'une quelconque des revendications 1 et 2, caractérisé en ce qu'est disposé un élément d'arrêt (36) apte à être commandé à partir des deux côtés longitudinaux (6, 8) du bâti intermédiaire (2), qui, dans la position verrouillée des verrouillages (10), vient s'engrener automatiquement avec le bras de commande (24, 24') et empêche en l'occurrence un déplacement du bras de commande (24, 24') dans la position de libération.

4. Système de transport selon la revendication 3, caractérisé en ce que l'élément d'arrêt mentionné (36) présente un crochet d'arrêt (38, 38') disposé sur chaque côté longitudinal (6, 8) qui est relié au crochet d'arrêt (38, 38') sur le côté longitudinal opposé, chaque crochet d'arrêt (38, 38') présentant une butée (42) qui vient s'engrener derrière le bras de commande (24, 24') dans la position terminale de verrouillage du bras de commande (24, 24') et empêche ainsi le mouvement de ce dernier.

5. Système de transport selon la revendication 4, caractérisé en ce que le crochet d'arrêt (38, 38') est chargé par un ressort et est pressé en l'occurrence contre le bras de commande (24, 24').

6. Système de transport selon l'une quelconque des revendications 1 à 5, caractérisé en ce que le verrouillage (10) comprend une multitude de gradins de verrouillage (16) approximativement en forme de U, le verrouillage comprenant des éléments de liaison (18) se reliant l'un à l'autre sur le côté longitudinal respectif (6, 8), dans lequel les extrémités de l'élément de liaison respectif (18) sont reliées respectivement à demeure à une branche du gradin de verrouillage correspondant (16), et dans lequel l'évidement (20) formé dans chaque gradin de verrouillage (16) enserre une arête (22) de la partie inférieure d'un récipient se trouvant sur le bâti intermédiaire (2).

7. Système de transport selon l'une quelconque des revendications 1 à 5, caractérisé en ce que le récipient présente au moins un côté où se trouve une porte roulante, en ce que le côté où se trouve la porte roulante est guidé dans deux rails qui sont suspendus en oscillation à leurs extrémités supérieures et en ce que, à l'extrémité inférieure du rail respectif, est disposé un mécanisme (55) qui permet un pivotement vers l'extérieur de la partie inférieure du côté où se trouve la porte roulante.

8. Système de transport selon la revendication 7, caractérisé en ce que le mécanisme (55) s'étend entre les deux rails mentionnés et comprend un levier de verrouillage (56, 56') présentant une position déverrouillée et une position verrouillée pour le pivotement vers l'extérieur de la partie inférieure du côté où se trouve la porte roulante dans la position déverrouillée mentionnée et pour la fixation de la partie inférieure du côté où se trouve la porte roulante dans la position verrouillée, un arrêt (58, 58') apte à être décliqueté, qui, dans son état encliqueté, fixe le levier de verrouillage (56, 56') dans sa position verrouillée, ainsi qu'une poignée de commande (60, 60') pour décliqueter l'arrêt (58, 58') et pour faire pivoter vers l'extérieur la partie inférieure du côté où se trouve la porte roulante.
